# EUROPEAN PATENT SPECIFICATION

(11) **EP 3 670 953 B1**
(45) Date of publication and mention of the grant of the patent: **13.10.2021**
(21) Application number: 19213640.6
(22) Date of filing: 04.12.2019
(51) Int. Cl.: F16D 13/38, F16D 21/06

(54) **CLUTCH MECHANISM HAVING A FIRST LEVER AND A SECOND LEVER**
KUPPLUNGSMECHANISMUS MIT EINEM ERSTEN UND EINEM ZWEITEN HEBEL
MÉCANISME D'EMBRAYAGE AYANT UN PREMIER LEVIER ET UN SECOND LEVIER

(30) Priority: 21.12.2018 TR 201820097
(43) Date of publication of application: 24.06.2020
(73) Proprietor: Valeo Otomotiv Sanayi ve Ticaret A.S., 34854 Istanbul (TR)
(72) Inventor: PEHLIVAN, Ahmet Koray, 16240 Bursa (TR); CAKMAK, Tolga, 16240 Bursa (TR)
(74) Representative: Valeo Powertrain Systems

(56) References cited:
- FR-A6- 2 226 038
- GB-A- 2 087 003
- US-A- 3 398 821

## Description

### TECHNICAL FIELD

The present invention relates to clutches used for controlling movement transfer in vehicles having a Power take Off shaft. In this description, the Power Take Off shaft will be also called "PTO" shaft.

### PRIOR ART

Clutches are used for interrupting movement transfer during gear changes in internal combustion engines.

Levers provided at said clutches realize separation function by means of the force exerted on levers. For this purpose, levers are connected onto a cover by means of a pin in a manner having rotational freedom. Said pins are inserted to the openings formed on the walls provided on a cover of the clutch. In order to decrease the frictions between the pins and the inner wall of the opening, bushing is fixed into the opening. On the other hand, in order to provide rotation of the lever and the pin together, there is a fixation pin fixed to a hole formed concentrically on the lever and on the pin. Thus, the lever and the pin rotate together inside the bushing and frictions are reduced. However, over time, fixation pins may become useless due to abrasions and due to removal thereof from their positions.

In alternative embodiments, the pin is connected to the walls of the cover in a rigid manner and the lever can realize rotational movement on the pin. In this case, in order to reduce frictions between the pin and the lever, bushing is fixed onto the lever. In said embodiment, the pin is fixed in a manner preventing rotation and removal thereof from the two ends.

On the other hand, double clutches used in tractors provide interruption of the movement transfer during gear change, and at the same time, said double clutches provide interruption of the movement, transferred to the PTO shaft, when required. For this purpose, levers are used which function in an independent manner from each other and which are associated with two units provided in the clutch. In order to provide distribution of said levers in a balanced manner on the clutch and in order to prevent excessive increase of the weight of the cover of the clutch, the levers are embodied to mutually use a middle wall provided between the levers. In other words, more than one lever is inserted to one middle wall. In this case, assembly of the lever to the walls becomes difficult. In prior arts which do not have middle wall, a rivet is used instead of a pin. Since the two levers are mutually bedded to the middle wall, the rivet is crushed and thus, assembly of the levers becomes impossible.

As a result, because of all of the abovementioned problems, an improvement is required in the related technical field. Documents FR 2226038 A6 and GB 2087821 A disclose a clutch mechanism according to the preamble of claim 1.

### BRIEF DESCRIPTION OF THE INVENTION

The present invention relates to a clutch mechanism, for eliminating the above mentioned disadvantages and for bringing new advantages to the related technical field.

An object of the present invention is to provide a clutch mechanism with extended lifetime and with facilitated assembly.

In order to realize the abovementioned objects and the objects which are to be deducted from the detailed description below, the present invention is a double clutch comprising at least one cover, at least one first side wall and at least one second side wall provided on said cover, one middle wall provided between the couple of first side wall and second side wall; a first lever positioned between the first side wall and the middle wall, one each first bearing openings provided on the first side wall and the middle wall and a first pin passing through a first pin opening provided on the first lever; a second lever positioned between the second side wall and the middle wall; one each second bearing openings provided on the second side wall and the middle wall and a second pin passing through a second pin opening provided on the second lever. Accordingly, there are at least one each threaded ends on the sides of the first pin and of the second pin connected to the middle wall. Thus, after the first pin and the second pin are assembled, rotational movement thereof is prevented and linear displacements thereof are prevented without needing an additional operation. Moreover, during the assembly, since there remains no need for an additional hole to be formed on the members like bushing, pin and lever, the reduction in the resistances of these members is prevented.

The invention is a clutch mechanism for torque transfer from a motor to a first shaft and/or to a second shaft in a motorized vehicle and which can rotate around a rotation axis and comprising a clutch cover and a first clutch part having a first separation means for separating the first clutch part and adapted to transfer torque to the first shaft and a second clutch part having a second separation means for separating the second clutch part and adapted to transfer torque to the second shaft and at least one first side wall and at least one second side wall provided on said clutch cover. The first separation means comprises a first lever placed between the first side wall and a middle wall and a first pin provided in a rotatable manner on the first lever and the second separation means comprises a second lever placed between the second side wall and the middle wall and a second pin provided in a rotatable manner on the second lever. Accordingly, at least one of the first pin and the second pin is connected to the middle wall.

In a possible embodiment of the present invention, the middle wall is located between the first side wall and the second side wall.

In a possible embodiment of the present invention, at least one adhesive material is provided between the inner walls of the first bearing opening and of the second bearing opening and the outer walls of the threaded ends. Thus, during operation of the first lever and the second lever, loosening of the pins is prevented.

In a possible embodiment of the present invention, at least one bushing is provided inside the first pin opening provided on the first lever and inside the second pin opening provided on the second lever. Thus, the frictional abrasions on the outer walls of the first pin and the second pin are reduced.

In a possible embodiment of the present invention, at least one holding end is provided at the ends of the first pin and of the second pin which are opposite with respect to the threaded ends. Thus, the first pin and the second pin are easily grabbed, rotated and assembled.

In a possible embodiment of the present invention, the first clutch part comprises a first press plate and a first clutch disc and the first separation means is adapted to separate the first clutch disc from the first press plate.

In a possible embodiment of the present invention, the second clutch part comprises a second press plate and a second clutch disc and the second separation means is adapted to separate the second clutch disc from the second press plate.

In a possible embodiment of the present invention, the first pin is placed between the first side wall and the middle wall.

In a possible embodiment of the present invention, the second pin is placed between the second side wall and the middle wall.

In the invention according to claim one, at least one of the first pin and the second pin comprises a threaded end on the sides thereof connected to the middle wall.

In a possible embodiment of the present invention, the first pin and the second pin are radially offset with respect to the rotation axis of the clutch.

In a possible embodiment of the present invention, a first bearing opening is provided on the first side wall and a first pin opening is provided on the first lever and a first pin passes through the first bearing opening, the first pin opening and the threaded hole of the middle wall.

In a possible embodiment of the present invention, a second bearing opening is provided on the second side wall and a second pin opening is provided on the second lever and a second pin passes through the second bearing opening, the second pin opening and the threaded hole of the middle wall.

In a possible embodiment of the present invention, the first separation means comprises three first levers oriented angularly and placed at the periphery of the rotation axis of the clutch and the second separation means comprises three second levers oriented angularly and placed at the periphery of the rotation axis of the clutch.

In a possible embodiment of the present invention, the clutch cover comprises a friction surface adapted to rub onto a first clutch disc.

In a possible embodiment of the present invention, at least one adhesive material is provided between the inner walls of the first bearing opening and the second bearing opening and the outer walls of the threaded ends.

In a possible embodiment of the present invention, at least one bushing is provided which is fixed to at least one of the first pin opening.

In a possible embodiment of the present invention, a bushing is inserted into the first pin opening.

In a possible embodiment of the present invention, at least one bushing is provided which is fixed to at least one of the second pin opening.

In a possible embodiment of the present invention, a bushing is inserted into the second pin opening.

In a possible embodiment of the present invention, at least one of the first pin and the second pin comprises at least one holding end provided at the ends which are opposite with respect to the threaded ends.

In a possible embodiment of the present invention, the holding end is six-cornered head or torx head or hex-head or outer torx head.

In a possible embodiment of the present invention, at least one of the first pin and the second pin is a shoulder bolt.

In a possible embodiment of the present invention, the first lever is configured to separate the first clutch disc, and the second lever is configured to separate the second clutch disc.

### BRIEF DESCRIPTION OF THE FIGURES

Figure 1 is a representative isometric view of the subject matter clutch mechanism.
Figure 2 is a representative isometric detailed view of the subject matter clutch mechanism.
Figure 3 is a representative partial cross-sectional view of the subject matter clutch mechanism.

### DETAILED DESCRIPTION OF THE INVENTION

In this detailed description, the subject matter clutch mechanism (10) is explained with references to examples without forming any restrictive effect only in order to make the subject more understandable.

Preferably the abovementioned clutch mechanism (10) has been positioned between the motor and the gear box in a tractor and has been adapted to be rotatable around a rotation axis (X). The first separation means (3a) and the second separation means (3b) have been provided on the clutch cover (20). The separation and clutch functions of the first clutch disc and the second clutch disc are controlled by using the first separation means (3a) and the second separation means (3b). The first clutch disc and the second clutch disc can rotate together with the first shaft and the second shaft of the gear box where one of the first separation means (3a) and the second separation means (3b) is connected to the wheels for driving the vehicle and where the other one of the first separation means (3a) and the second separation means (3b) is connected to the PTO shaft. Said first clutch disc and said second clutch disc provide clutch function by means of compression thanks to the first press plate and the second press plate respectively. The clutch cover (20) comprises a friction surface where preferebly the first clutch disc can be rubbed. The part of the clutch mechanism (10) formed by the first press plate and the first separation means (3a) is defined as the first clutch part, and the part of the clutch mechanism (10) formed by the second press plate and the second separation means (3a) is defined as the second clutch part.

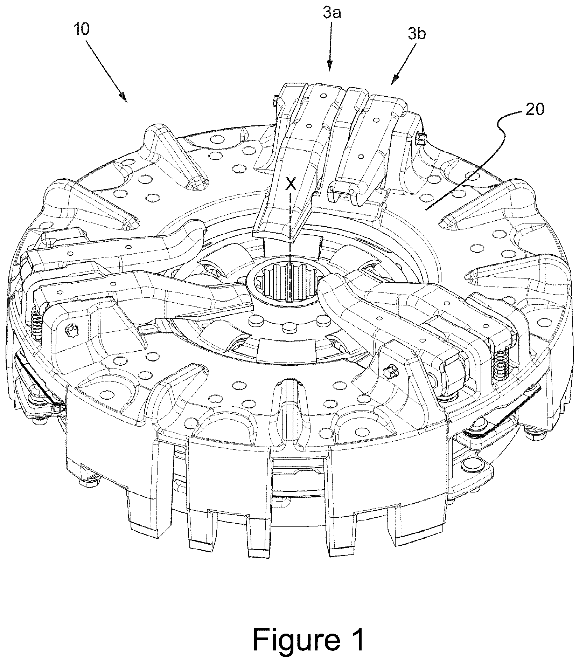

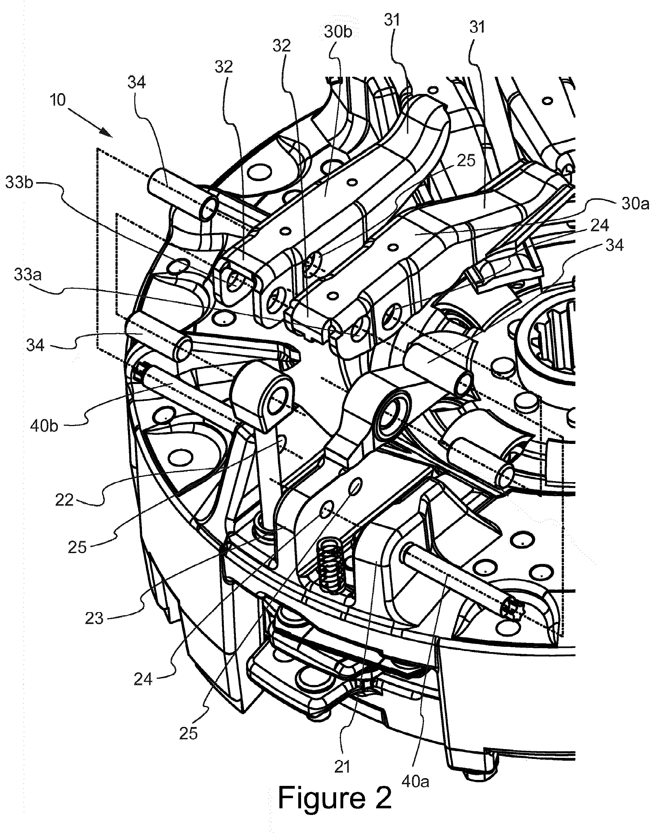

As can be seen in Figure 1 and 2, the subject matter clutch mechanism (10) has a clutch cover (20) and a first lever (30a) and a second lever (30b) connected to said cover (20).

In details, there is a first side wall (21) and a second side wall (22) provided in embossment form on the clutch cover (20). There is a middle wall (23) provided so as to be between the first side wall (21) and the second side wall (22). There are one each first bearing openings (24) provided concentrically on the first side wall (21) and the middle wall (23). In a similar manner, there are one each second bearing openings (25) provided concentrically on the second side wall (22) and the middle wall (23).

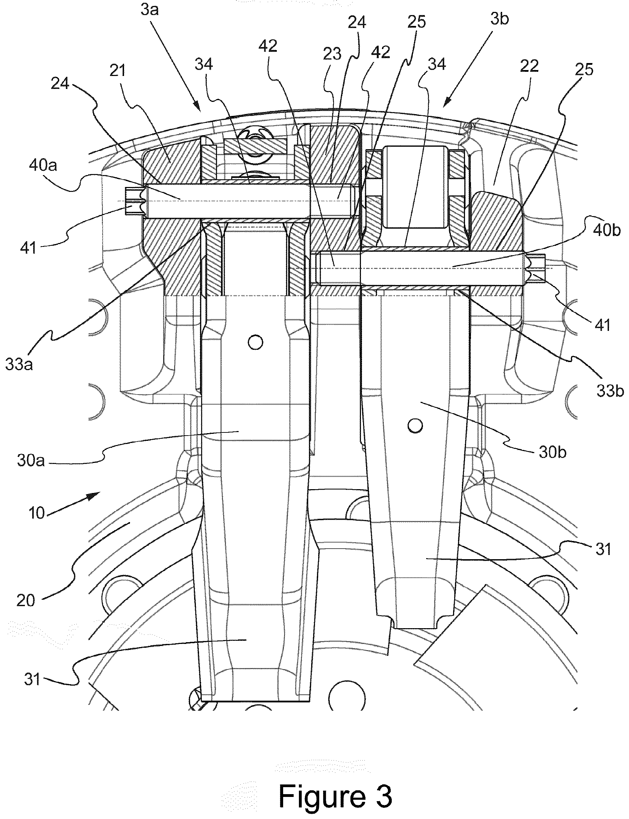

As can be seen in Figure 2 and Figure 3, there is at least one first pin opening (33a) provided on the first lever (30a) and there is at least one second pin opening (33b) provided on the second lever (30b). There are one each bushings (34) fixed into the first pin opening (33a) and into the second pin opening (33b). While the first lever (30a) and the second lever (30b) are assembled to the cover (20), at least one first pin (40a) and at least one second pin (40b) pass through said bushings (34). Said first pin opening (33a) and said second pin opening (33b) are provided at a predetermined distance from one end of the first lever (30a) and the second lever (30b) whereon said first pin opening (33a) and said second pin opening (33b) are provided. Accordingly, the end of the first pin opening (33a) and of the second pin opening (33b) provided on the first lever (30a) and the second lever (30b) which is close to the rotation axis (X) of the cover (20) is defined as a control end (31) and the end of the cover (20) which is far from the rotation axis (X) is defined as a drive end (32). The first lever (30a) and the second lever (30b) realize rotational movement in the first pin (40a) and in the second pin (40b) axes by means of the forces exerted from the control end (31), and clutching or separation occurs by means of the movement formed at the drive end (32). The first separation means (3a) comprises the parts required for separating the first clutch disc and the bushing (34) placed to the first pin opening (33a) and the first lever (30a). The second separation means (3b) comprises the parts required for separating the second clutch disc and the bushing (34) placed to the second pin opening (33b) and the second lever (30b).

An end of the first pin (40a) and of the second pin (40b) is defined as a holding end (41) and the other end thereof is defined as a threaded end (42). Accordingly, while there is a structure which is similar to wrench inlet, torx or hex-inlet; screw threads are provided on the outer wall of the threaded end (42).

In order to provide assembly of the first lever (30a) to the cover (20), the first lever (30a) is positioned between the first side wall (21) and the middle wall (23). Meanwhile, the first bearing hole (24) and the inner gap of the bushing (34) are positioned coaxially. Afterwards, the first pin (40a), particularly the threaded end (42) enters through the first bearing opening (24) provided on the first side wall (21) and passes through the bushing (34), and the threaded end (42) of the first pin (40a) is screwed to the inner wall of the first bearing opening (24) provided on the middle wall (23). During this process, the first pin (40a) is rotated through the holding end (41) by using a means which is similar to a screwdriver, hex nut wrench torx or a means similar to hex-wrench. After the assembly of the first lever (30a) is completed, the second lever (30b) is positioned between the second side wall (22) and the middle wall (23), and the second bearing openings (25) and the inner gap of the bushing (34) are aligned. Afterwards, the threaded end (42) of the second pin (40b) enters through the second bearing opening (25) provided on the second side wall (22) and passes through the bushing (34), and the threaded end (42) of the second pin (40b) is screwed to the inner wall of the second bearing opening (25) provided on the middle wall (23). During this process, the second pin (40b) is rotated through the holding end (41) by using a tool which is similar to screwdriver, hex nut wrench torx or a tool similar to hex-wrench. Thanks to said structure, the assembly of the first lever (30a) and the second lever (30b) onto a mutual middle wall (23) is provided. Moreover, during said application, since there is no need to form an additional hole for an extra pin on the bushings (34) or on the first lever (30a) and on the second lever (30b), the weakening of the resistances of these parts is prevented.

Moreover, since the first pin (40a) and the second pin (40b) are fixed by means of screwing, the rotation thereof is provided without needing an additional operation after the assembly and the removal thereof from their locations as a result of an axial movement is prevented.

On the other hand, during the assemblies of the first pin (40a) and of the second pin (40b), adhesive material is applied onto the threaded parts (42), and the loosening of the first pin (40a) and of the second pin (40b) is prevented, and thus, the removal thereof from their locations is prevented after the assembly.

The protection scope of the present invention is set forth in the annexed claims.

### REFERENCE NUMBERS

- 10: Clutch mechanism
- 20: Clutch cover
- 21: First side wall
- 22: Second side wall
- 23: Middle wall
- 24: First bearing opening
- 25: Second bearing opening

- 3a: First separation means
- 30a: First lever
- 3b: Second separation means
- 30b: Second lever
- 31: Control end
- 32: Drive end
- 33a: First pin opening
- 33b: Second pin opening
- 34: Bushing

- 40a: First pin
- 40b: Second pin
- 41: Holding end
- 42: Threaded end
- X: Rotation axis

## Claims

1. A clutch mechanism (10) for torque transfer from a motor to a first shaft and/or to a second shaft in a motorized vehicle and which can rotate around a rotation axis (X) and comprising a clutch cover (20) and a first clutch part having a first separation means (3a) for separating the first clutch part and adapted to transfer torque to the first shaft and a second clutch part having a second separation means (3b) for separating the second clutch part and adapted to transfer torque to the second shaft and at least one first side wall (21) and at least one second side wall (22) provided on said clutch cover (20); the first separation means (3a) comprises a first lever (30a) placed between the first side wall (21) and a middle wall (23) and a first pin (40a) provided rotatably on the first lever (30a), and the second separation means (3b) comprises a second lever (30b) placed between the second side wall (22) and the middle wall (23) and a second pin (40b) provided rotatably on the second lever (30b), wherein at least one of the first pin (40a) and the second pin (40b) is connected to the middle wall (23), and **characterized in that** at least one of the first pin (40a) and the second pin (40b) comprises a threaded end (42) on the sides thereof connected to the middle wall (23).

2. The clutch mechanism (10) according to claim 1, **wherein** the first clutch part comprises a first press plate and a first clutch disc and the first separation means (3a) is adapted to separate the first clutch disc from the first press plate.

3. The clutch mechanism (10) according to claim 1, **wherein** the second clutch part (16) comprises a second press plate and a second clutch disc and the second separation means (3b) is adapted to separate the second clutch disc from the second press plate.

4. The clutch mechanism (10) according to any one of the preceding claims, **wherein** the first pin (40a) is placed between the first side wall (21) and the middle wall (23).

5. The clutch mechanism (10) according to any one of the preceding claims, **wherein** the second pin (40b) is placed between the second side wall (22) and the middle wall (23).

6. The clutch mechanism (10) according to any one of the preceding claims, **wherein** the first pin (40a) and the second pin (40b) comprise a threaded end (42) on the sides thereof connected to the middle wall (23).

7. The clutch mechanism (10) according to any one of the preceding claims, **wherein** the first pin (40a) and the second pin (40b) are radially offset with respect to the rotation axis of the clutch.

8. The clutch mechanism (10) according to any one of the preceding claims, **wherein** a first bearing opening (24) is provided on the first side wall (21) and a first pin opening (33a) is provided on the first lever (30a) and a first pin (40a) passes through the first bearing opening (24), the first pin opening (33a) and the threaded hole of the middle wall (23).

9. The clutch mechanism (10) according to any one of the preceding claims, **wherein** a second bearing opening (25) is provided on the second side wall (22) and a second pin opening (33b) is provided on the second lever (30b) and a second pin (40b) passes through the second bearing opening (25), the second pin opening (33b) and the threaded hole of the middle wall (23).

10. The clutch mechanism (10) according to any one of the preceding claims, **wherein** the first separation means (3a) comprises three first levers (30a) oriented angularly and placed at the periphery of the rotation axis (X) of the clutch and the second separation means (3b) comprises three second levers (30b) oriented angularly and placed at the periphery of the rotation axis (X) of the clutch.

11. The clutch mechanism (10) according to any one of the preceding claims, **wherein** the clutch cover (20) comprises a friction surface adapted to rub to a first clutch disc.

12. The clutch mechanism (10) according to any one of the preceding claims, **wherein** at least one of the first pin (40a) and the second pin (40b) comprises at least one holding end (41) provided at the ends which are opposite with respect to the threaded ends (42).

13. The clutch mechanism (10) according to the preceding claim, **wherein** the holding end (41) is six-cornered head or torx head or hex-head or outer torx head.

14. The clutch mechanism (10) according to any one of the preceding claims, **wherein** at least one of the first pin (40a) and the second pin (40b) is a shoulder bolt.

15. The clutch mechanism (10) according to any one of the preceding claims, **wherein** the first lever (30a) is configured to separate the first clutch disc, and the second lever (30b) is configured to separate the second clutch disc.

## Patentansprüche

1. Kupplungsmechanismus (10) für die Drehmomentübertragung von einem Motor zu einer ersten Welle und/oder zu einer zweiten Welle in einem Motorfahrzeug, der sich um eine Rotationsachse (X) drehen kann und der eine Kupplungsabdeckung (20) und einen ersten Kupplungsteil, der ein erstes Trennmittel (3a) zum Trennen des ersten Kupplungsteils hat und zur Übertragung von Drehmoment zu der ersten Welle ausgeführt ist, und einen zweiten Kupplungsteil, der ein zweites Trennmittel (3b) zum Trennen des zweiten Kupplungsteils hat und zur Übertragung von Drehmoment zu der zweiten Welle ausgeführt ist, und mindestens eine erste Seitenwand (21) und mindestens eine zweite Seitenwand (22) umfasst, die an der Kupplungsabdeckung (20) vorgesehen sind, wobei das erste Trennmittel (3a) einen ersten Hebel (30a), der zwischen der ersten Seitenwand (21) und einer mittleren Wand (23) platziert ist, und einen ersten Stift (40a) umfasst, der drehbar an dem ersten Hebel (30a) vorgesehen ist, und das zweite Trennmittel (3b) einen zweiten Hebel (30b), der zwischen der zweiten Seitenwand (22) und der mittleren Wand (23) platziert ist, und einen zweiten Stift (40b) umfasst, der drehbar an dem zweiten Hebel (30b) vorgesehen ist, wobei der erste Stift (40a) und/oder der zweite Stift (40b) mit der mittleren Wand (23) verbunden sind, **dadurch gekennzeichnet, dass** der erste Stift (40a) und/oder der zweite Stift (40b) ein Gewindeende (42) an den Seiten davon umfassen, das mit der mittleren Wand (23) verbunden ist.

2. Kupplungsmechanismus (10) nach Anspruch 1, wobei der erste Kupplungsteil eine erste Pressplatte und eine erste Kupplungsscheibe umfasst und das erste Trennmittel (3a) dazu ausgeführt ist, die erste Kupplungsscheibe von der ersten Pressplatte zu trennen.

3. Kupplungsmechanismus (10) nach Anspruch 1, wobei der zweite Kupplungsteil (16) eine zweite Pressplatte und eine zweite Kupplungsscheibe umfasst und das zweite Trennmittel (3b) dazu ausgeführt ist, die zweite Kupplungsscheibe von der zweiten Pressplatte zu trennen.

4. Kupplungsmechanismus (10) nach einem der vorhergehenden Ansprüche, wobei der erste Stift (40a) zwischen der ersten Seitenwand (21) und der mittleren Wand (23) platziert ist.

5. Kupplungsmechanismus (10) nach einem der vorhergehenden Ansprüche, wobei der zweite Stift (40b) zwischen der zweiten Seitenwand (22) und der mittleren Wand (23) platziert ist.

6. Kupplungsmechanismus (10) nach einem der vorhergehenden Ansprüche, wobei der erste Stift (40a) und der zweite Stift (40b) ein Gewindeende (42) an den Seiten davon umfassen, das mit der mittleren Wand (23) verbunden ist.

7. Kupplungsmechanismus (10) nach einem der vorhergehenden Ansprüche, wobei der erste Stift (40a) und der zweite Stift (40b) bezüglich der Rotationsachse der Kupplung radial versetzt sind.

8. Kupplungsmechanismus (10) nach einem der vorhergehenden Ansprüche, wobei eine erste Lageröffnung (24) an der ersten Seitenwand (21) vorgesehen ist und eine erste Stiftöffnung (33a) an dem ersten Hebel (30a) vorgesehen ist und ein erster Stift (40a) durch die erste Lageröffnung (24), die erste Stiftöffnung (33a) und das Gewindeloch der mittleren Wand (23) geht.

9. Kupplungsmechanismus (10) nach einem der vorhergehenden Ansprüche, wobei eine zweite Lageröffnung (25) an der zweiten Seitenwand (22) vorgesehen ist und eine zweite Stiftöffnung (33b) an dem zweiten Hebel (30b) vorgesehen ist und ein zweiter Stift (40b) durch die zweite Lageröffnung (25), die zweite Stiftöffnung (33b) und das Gewindeloch der mittleren Wand (23) geht.

10. Kupplungsmechanismus (10) nach einem der vorhergehenden Ansprüche, wobei das erste Trennmittel (3a) drei erste Hebel (30a) umfasst, die winklig ausgerichtet und am Umfang der Rotationsachse (X) der Kupplung platziert sind, und das zweite Trennmittel (3b) drei zweite Hebel (30b) umfasst, die winklig ausgerichtet und am Umfang der Rotationsachse (X) der Kupplung platziert sind.

11. Kupplungsmechanismus (10) nach einem der vorhergehenden Ansprüche, wobei die Kupplungsabdeckung (20) eine Reibfläche umfasst, die dazu ausgeführt ist, an einer ersten Kupplungsscheibe zu reiben.

12. Kupplungsmechanismus (10) nach einem der vorhergehenden Ansprüche, wobei der erste Stift (40a) und/oder der zweite Stift (40b) mindestens ein Halteende (41) umfassen, das an den Enden vorgesehen ist, die den Gewindeenden (42) gegenüberliegen.

13. Kupplungsmechanismus (10) nach dem vorhergehenden Anspruch, wobei das Halteende (41) ein Sechseckkopf oder ein Torx-Kopf oder ein Sechskantkopf oder ein Außen-Torx-Kopf ist.

14. Kupplungsmechanismus (10) nach einem der vorhergehenden Ansprüche, wobei der erste Stift (40a) und/oder der zweite Stift (40b) Bundschrauben sind.

15. Kupplungsmechanismus (10) nach einem der vorhergehenden Ansprüche, wobei der erste Hebel (30a) dazu ausgestaltet ist, die erste Kupplungsscheibe zu trennen, und der zweite Hebel (30b) dazu ausgestaltet ist, die zweite Kupplungsscheibe zu trennen.

## Revendications

1. Mécanisme d'embrayage (10) pour le transfert de couple d'un moteur à un premier arbre et/ou à un deuxième arbre dans un véhicule motorisé et qui peut tourner autour d'un axe de rotation (X) et comprenant un couvercle d'embrayage (20) et une première partie d'embrayage ayant un premier moyen de séparation (3a) pour séparer la première partie d'embrayage et adaptée pour transférer un couple au premier arbre et une deuxième partie d'embrayage ayant un deuxième moyen de séparation (3b) pour séparer la deuxième partie d'embrayage et adaptée pour transférer un couple au deuxième arbre et au moins une première paroi latérale (21) et au moins une deuxième paroi latérale (22) prévues sur ledit couvercle d'embrayage (20); le premier moyen de séparation (3a) comprenant un premier levier (30a) placé entre la première paroi latérale (21) et une paroi médiane (23) et un premier axe (40a) prévu à rotation sur le premier levier (30a), et le deuxième moyen de séparation (3b) comprenant un deuxième levier (30b) placé entre la deuxième paroi latérale (22) et la paroi médiane (23) et un deuxième axe (40b) prévu à rotation sur le deuxième levier (30b), dans lequel au moins l'un des premier axe (40a) et deuxième axe (40b) est relié à la paroi médiane (23), et **caractérisé en ce qu'**au moins l'un du premier axe (40a) et du deuxième axe (40b) comprend une extrémité filetée (42) sur les côtés reliés à la paroi médiane (23).

2. Mécanisme d'embrayage (10) selon la revendication 1, dans lequel la première partie d'embrayage comprend un premier plateau de pressage et un premier disque d'embrayage et le premier moyen de séparation (3a) est adapté pour séparer le premier disque d'embrayage du premier plateau de pressage.

3. Mécanisme d'embrayage (10) selon la revendication 1, dans lequel la deuxième partie d'embrayage (16) comprend un deuxième plateau de pressage et un deuxième disque d'embrayage et le deuxième moyen de séparation (3b) est adapté pour séparer le deuxième disque d'embrayage du deuxième plateau de pressage.

4. Mécanisme d'embrayage (10) selon l'une quelconque des revendications précédentes, dans lequel le premier axe (40a) est placé entre la première paroi latérale (21) et la paroi médiane (23).

5. Mécanisme d'embrayage (10) selon l'une quelconque des revendications précédentes, dans lequel le deuxième axe (40b) est placé entre la deuxième paroi latérale (22) et la paroi médiane (23).

6. Mécanisme d'embrayage (10) selon l'une quelconque des revendications précédentes, dans lequel le premier axe (40a) et le deuxième axe (40b) comportent une extrémité filetée (42) sur les côtés reliés à la paroi médiane (23).

7. Mécanisme d'embrayage (10) selon l'une quelconque des revendications précédentes, dans lequel le premier axe (40a) et le deuxième axe (40b) sont décalés radialement par rapport à l'axe de rotation de l'embrayage.

8. Mécanisme d'embrayage (10) selon l'une quelconque des revendications précédentes, dans lequel une première ouverture de palier (24) est prévue sur la première paroi latérale (21) et une première ouverture d'axe (33a) est prévue sur le premier levier (30a) et un premier axe (40a) traverse la première ouverture de palier (24), la première ouverture d'axe (33a) et le trou taraudé de la paroi médiane (23).

9. Mécanisme d'embrayage (10) selon l'une quelconque des revendications précédentes, dans lequel une deuxième ouverture de palier (25) est prévue sur la deuxième paroi latérale (22) et une deuxième ouverture d'axe (33b) est prévue sur le deuxième levier (30b) et un deuxième axe (40b) traverse la deuxième ouverture de palier (25), la deuxième ouverture d'axe (33b) et le trou taraudé de la paroi médiane (23).

10. Mécanisme d'embrayage (10) selon l'une quelconque des revendications précédentes, dans lequel le premier moyen de séparation (3a) comprend trois premiers leviers (30a) orientés angulairement et placés à la périphérie de l'axe de rotation (X) de l'embrayage et le deuxième moyen de séparation (3b) comprend trois deuxièmes leviers (30b) orientés angulairement et placés à la périphérie de l'axe de rotation (X) de l'embrayage.

11. Mécanisme d'embrayage (10) selon l'une quelconque des revendications précédentes, dans lequel le couvercle d'embrayage (20) comprend une surface de friction adaptée pourfrottersur un premier disque d'embrayage.

12. Mécanisme d'embrayage (10) selon l'une quelconque des revendications précédentes, dans lequel au moins l'un du premier axe (40a) et du deuxième axe (40b) comprend au moins une extrémité de maintien (41) prévue aux extrémités qui sont opposés par rapport aux extrémités filetées (42).

13. Mécanisme d'embrayage (10) selon la revendication précédente, dans lequel l'extrémité de maintien (41) est une tête à six pans ou une tête torx ou une tête hexagonale ou une tête torx externe.

14. Mécanisme d'embrayage (10) selon l'une quelconque des revendications précédentes, dans lequel au moins l'un du premier axe (40a) et du deuxième axe (40b) est un boulon à épaulement.

15. Mécanisme d'embrayage (10) selon l'une quelconque des revendications précédentes, dans lequel le premier levier (30a) est configuré pour séparer le premier disque d'embrayage, et le deuxième levier (30b) est configuré pour séparer le deuxième disque d'embrayage.
